Europäisches Patentamt

European Patent Office

Office européen des brevets

(19)

(11) Publication number: **0 191 223**
**A2**

# (12) EUROPEAN PATENT APPLICATION

(21) Application number: **85307693.3**

(22) Date of filing: **24.10.85**

(51) Int. Cl.⁴: **G 01 D 5/245**

(30) Priority: **09.11.84 US 669806**

(43) Date of publication of application: **20.08.86**
**Bulletin 86/34**

(84) Designated Contracting States: **DE FR GB IT**

(71) Applicant: **The Superior Electric Company, 383 Middle Street, Bristol Connecticut 06010 (US)**

(72) Inventor: **Lundin, Robert Siegfried, Old Northfield Road, Northfield Connnecticut (US)**
Inventor: **Kaplan, Martin, 22, Cottonwood Drive, Avon Connnecticut (US)**

(74) Representative: **Bannerman, David Gardner et al, Withers & Rogers 4 Dyer's Buildings Holborn, London, EC1N 2JT (GB)**

(54) **Magnetically-coupled transducer means.**

(57) A magnetically-coupled transducer having a rotating member and a stationary member. On the outer circumference of the rotating member is a continuous series of alternating N and S magnetic poles. The stationary member includes at least one fluxgate positioned to detect rotation of the rotating member. The use of a fluxgate detector allows transducer operation at relatively high temperatures and permits construction of an encoder/electric motor assembly in a relatively compact unit. The transducer provides relative position information independent of speed.

0191223

MAGNETICALLY-COUPLED TRANSDUCER MEANS

BACKGROUND OF THE INVENTION

1. Field of the Invention

The present invention relates to a magnetically-coupled transducer device, and more particularly to such a device that is relatively small in size and is suitable for use at relatively high temperatures.

2. Description of the Prior Art

Transducer devices of the general type under consideration are well known in the art and are characterized typically by a rotating member, whose rotating motion is caused by linkage to a machine about which position or motion information is desired, and a stationary member, which members are coupled either optically, capacitively, or magnetically. The stationary member includes one or more detectors which provide electrical output signals which can be processed to determine, in some cases, the position, direction, speed, and/or acceleration of the rotating member and therefore those parameters as related to the machine. Such prior art transducers have the disadvantage(s), in some applications, of relatively large size and/or inability to withstand relatively high temperatures. For example, it is advantageous in some cases to be able to have as a single and compact unit a transducer assembly and an electric motor (which may operate at relatively high temperatures) without having dimensions appreciably greater than those of the motor alone.

In optical transducers, for example, the detector includes a semiconductor device which is limited to a maximum temperature on the order of 85 degrees Celsius. Further, some of the electronic circuitry associated with the detector in an optical transducer may desirably be located near the detector to minimize the length of connections (because of signal-to-noise ratio considerations) and such circuitry also includes high-temperature-sensitive components. The optical transducer may also be of too large size for some applications. Capacitively-coupled transducers may be suitable at higher temperatures, but the high-frequency signal outputs from

-1-

the detectors require relatively large, high-frequency co-axial cables and may be difficult to fit into as small a space as necessary. The prior art magnetically-coupled transducers may be able to overcome some of the size and frequency limitations, but typically employ for detectors semiconductor devices such as the Hall detector, the magneto resistor, the magneto diode, or the variable reluctance signal generator. The first three have the intolerance to high temperatures noted above and the latter is unable to generate relative position information independent of speed. A further limitation of some prior art devices is that they do not provide any position information.

## SUMMARY OF THE INVENTION

An object of the present invention is to provide a magnetically-coupled transducer suitable for use at relatively high temperature.

An additional object of the present invention is to provide a magnetically-coupled transducer that is able to generate relative position information independent of speed.

Another object of the present invention is to provide a magnetically-coupled transducer which is relatively compact and of small dimensions.

A further object of the present invention is to provide a magnetically-coupled transducer that may be mounted together with an electric motor to form a single and compact unit, without appreciably increasing the dimensions of the motor.

According to the present invention, a novel magneticallycoupled transducer is provided which employs for magnetic detection one or more fluxgates. The use of fluxgates as detectors in a magnetic transducer permits the use of such a transducer at relatively high temperatures and allows its construction in a relatively compact form. The preferred embodiment is described as having a rotating cylindical member with a continuous series of alternating N and S magnetic poles upon the outer periphery thereof. The stationary member includes one or more fluxgates, with associated pole pieces, positioned around the periphery of the rotating member.

## BRIEF DESCRIPTION OF THE DRAWING

Figure 1   shows an embodiment of the rotating and stationary elements of the present invention.

Figure 2   shows an alternative embodiment of the rotating member.

Figure 3   is a block diagram of the circuitry associated with the present invention.

-2-

Figure 4  is a partially exploded view of a transducer/electric motor
unit embodying the present invention.

Figure 5  shows the unit of Figure 4 in assembled form.


## DESCRIPTION OF THE PREFERRED EMBODIMENT

Fluxgates per se are well known in the art and have traditionally been
used for detection of very weak magnetic fields at a great distance, such
as submarine and mine detection and detection of the earth's magnetic
field.  Typically, a fluxgate comprises a magnetically permeable core, in
which a magnetic flux is induced by the passage of an alternating
(exciting) current through a coil wound around the core or through the core
directly.  The interaction of the induced flux with the field flux being
detected induces in a second coil wound around the core an alternating
(output) current having a frequency of twice that of the exciting current
and modulated proportionally to the strength of the field flux.

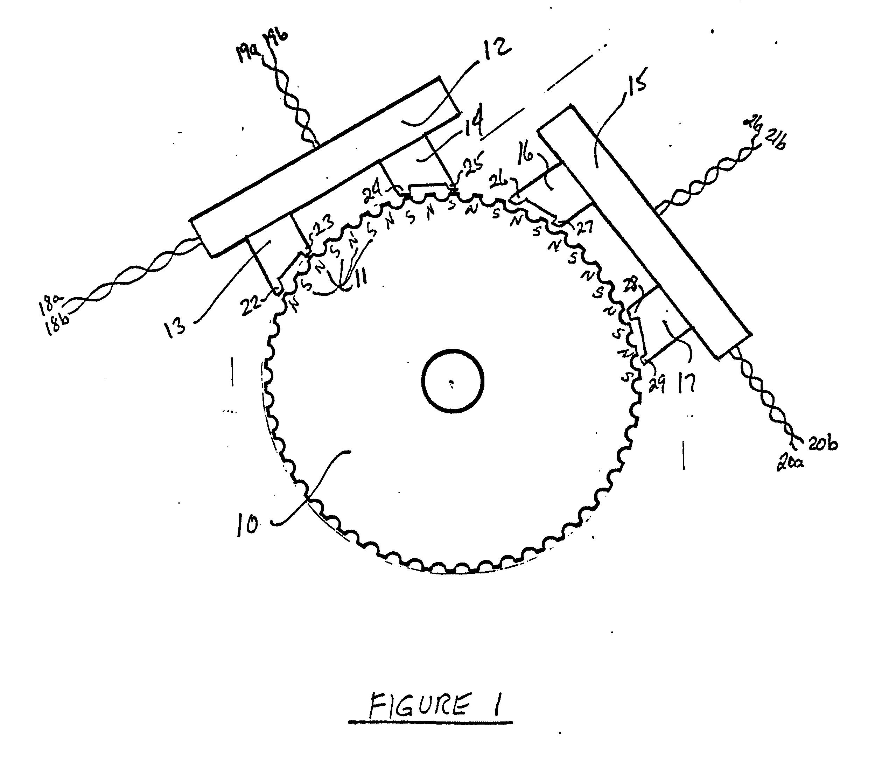

Referring to the Drawing, Figure 1 shows the primary elements of the
present invention which includes a cylindrical rotating member 10 the outer
periphery of which comprises a continuous series of alternating N and S
magnetic poles, such as at 11.  A fluxgate 12, stationary with respect to
the rotating member 10, includes pole pieces 13 and 14.  A second
stationary fluxgate 15 includes pole pieces 16 and 17.  Exciting current is
supplied to fluxgate 12 on leads 18a and 18b and an output signal is
produced at leads 19a and 19b.  Similarly, exciting current is supplied to
fluxgate 15 on leads 20a and 20b and an output signal is produced at leads
21a and 21b.

The pole teeth 22 and 23 on pole piece 13 are so positioned that they
are adjacent to, and flux-linked with, N poles on the rotating member 10 at
the same time that the pole teeth 24 and 25 on pole piece 14 are positioned
adjacent to, and flux-linked with, S poles on the rotating member.  This
arrangement will thus produce a sine wave output at leads 19a and 19b when
successive N and S magnetic poles move past the respective teeth.  At the
same time, in the position shown, the pole pieces 16 and 17 associated with
fluxgate 15 have their respective pole teeth 26, 27, 28, 29 positioned, as
shown, halfway between N and S poles on the rotating member 10.  The sine
wave output which will be produced at leads 21a and 21b when the rotating
member rotates will thus be in quadrature with that produced at leads 19a
and 19b on fluxgate 12.  While the outputs are referred to herein as "sine
waves", it will be understood that these are not necessarily pure sine
waves, but are periodic waves having sinusoidal characteristics.

While the sine wave output from a single fluxgate can be used for deriving position, speed, and/or acceleration, it has been found that greater and more satisfactory resolution of position information is obtained when two fluxgates, displaced 90 electrical degrees as shown, are employed. Also, derivation of direction information requires that at least two fluxgates be used. Were even greater resolution desired, additional fluxgates could be employed. For example, two more fluxgates, if used, would be displaced one 45 and the other 135 electrical degrees from fluxgate 12.

Although the pole pieces 13, 14, 16, and 17 are shown as having two teeth each (22 and 23, 24 and 25, 26 and 27, and 28 and 29, respectively), each pole piece may have one or any greater number of teeth. The greater the number, the greater the flux collecting capability of pole piece. It has been found, however, that quite satisfactory performance can be achieved when the pole pieces have two teeth each.

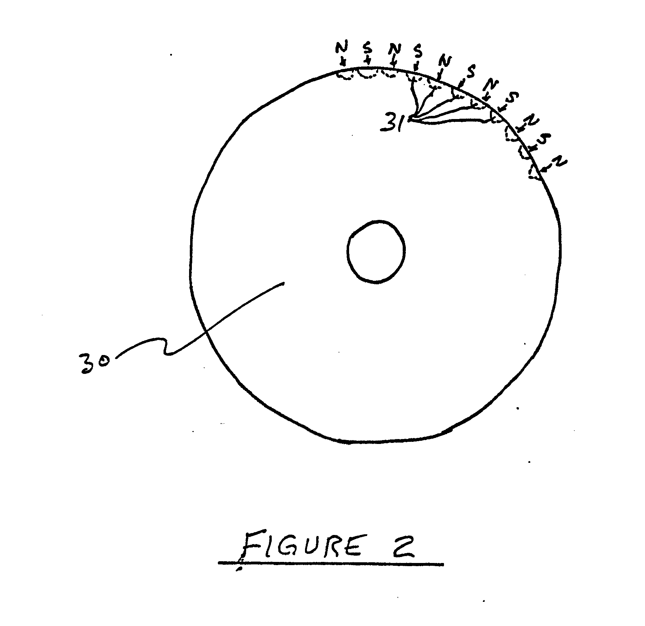

The rotating member 10 shown in Figure 1 has physically definable, or salient, poles. The actual structure which provides the salient poles is unimportant to the present invention, provided that successive pairs of N-S poles are flux-linked with the detector. For example, the salient poles, such as at 11 on Figure 1, may be mechanically formed on a disk of magnetic material followed by magnetization. Alternatively, individual poles or pole pairs may be affixed to the circumference of a cylinder. In yet another structure, an axially magnetized disk may have circular pole pieces on the face of the disk, with fingers on the outer periphery of the pole pieces being interdigitated to provide alternating N-S poles. Any of these structures will appear generally as shown for the rotating member 10. Also, the transducer of the present invention will perform as well with a rotating member 30 having a smooth outer periphery, as shown in Figure 2, with alternating N and S poles being impressed thereon, as at 31.

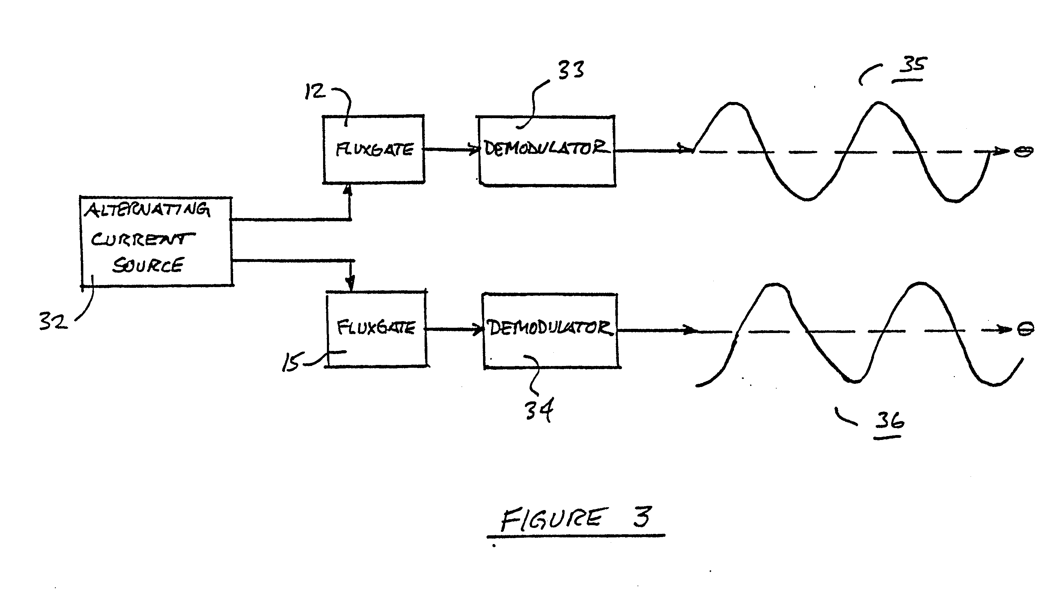

Figure 3 is a block diagram representing the circuitry associated with the transducer of the present invention as shown on Figure 1. Fluxgates 12 and 15 are supplied with exciting current from an alternating current source 32. The outputs of the fluxgates 12 and 15 are amplitude-modulated alternating currents at twice the frequency of the exciting current. Appropriate conventional circuitry for demodulating these outputs is indicated at 33 and 34, respectively, and the resulting sine waves are shown generally by the reference numerals 35 and 36. These sine waves are displaced 90°, resulting from the fact that the fluxgates 12 and 15 are displaced 90 electrical degrees. Although a number of techniques may be

-4-

employed to further process the demodulated outputs, it has been found most satisfactory to employ conventional electronic circuitry to detect the zero crossings of the sine waves and, from this information, to determine the parameters of position, speed, and acceleration/deceleration. Having two outputs displaced as shown permits the determination of direction, as well as providing additional zero crossings for greater resolution of position information.

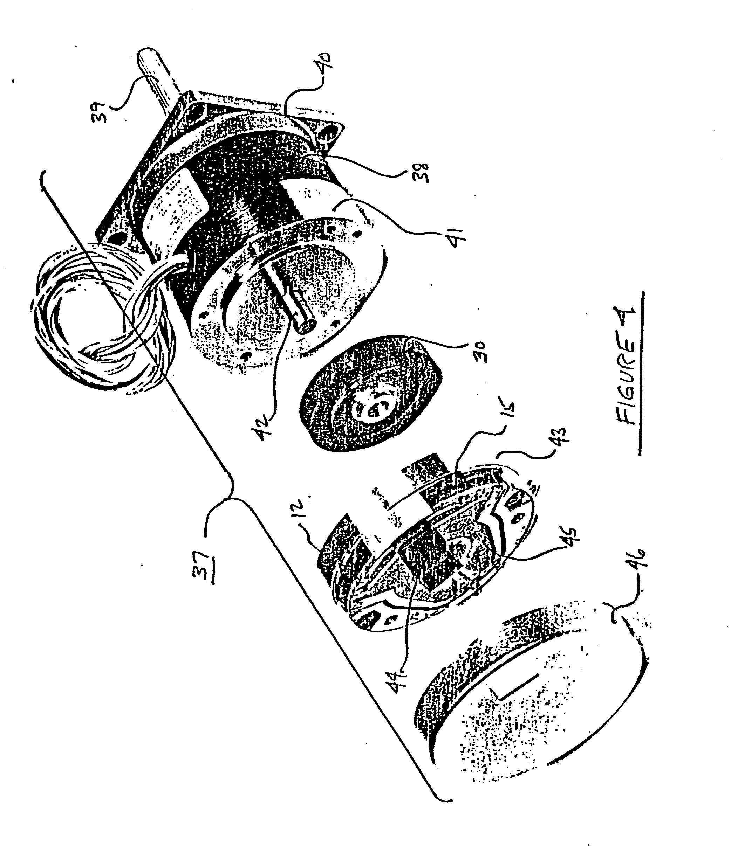

Figure 4 is a partially exploded view of an electric motor with an integral transducer of the present invention, all generally indicated by the reference numeral 37, and includes, in the motor portion, a stator 38, a shaft 39, a front end piece 40, and a rear end piece 41. The rotating member 30 of the transducer portion is adapted for fixed mounting on a rearward extension 42 of the motor shaft 39. A housing 43 is constructed for attachment to the rear end piece 41, holds the fluxgates 12 and 15, and is partially hollow to allow rotation of the rotating member 30 within the housing in proximity to the fluxgates. A connector 44 facilitates connection with external wiring. The circuits between the connector and the fluxgates 12 and 15 are completed by means of a printed circuit board 45 mounted on the rear surface of the housing 43. A cover 46 is adapted to be glued to the housing 43 and completes the assembly.

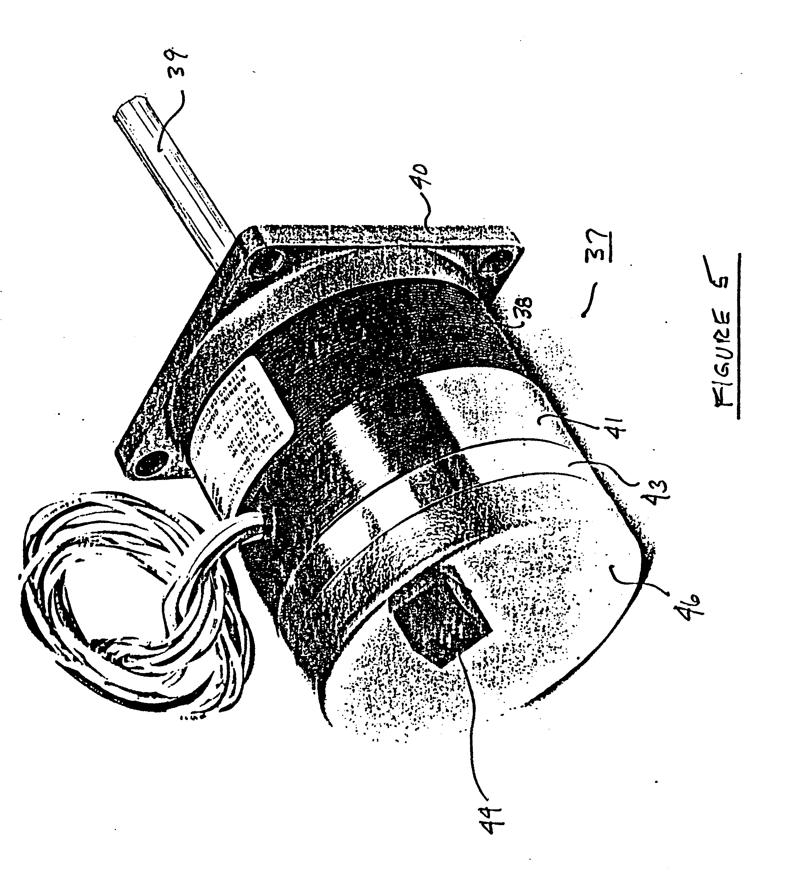

Figure 5 shows the assembled device of Figure 4. For the device shown, the transducer portion itself may add on the order of only 0.6 inch to the length of the motor without increasing the diameter thereof.

Since neither the rotating nor the stationary elements of the transducer of the present invention include semiconductor devices or other components that are sensitive to heat, the invention may be used at high temperatures without affecting its performance. For example, the invention may be employed within a motor assembly, as shown in Figures 4 and 5, without special concern for cooling the transducer or limiting the temperature rise of the motor. In a test of one such assembly, satisfactory operation was achieved at temperatures up to 190° Celsius. Below the Curie point of the magnetic materials involved, about 400° Celsius (at which point magnetic flux ceases), satisfactory operation should be limited only by the capability of the electrical insulating materials used.

The use of a fluxgate as a detector, unlike the variable reluctance signal generator detector, enables detection of relative position information while the rotating member is at rest, since the detector will at all times be flux-linked with at least one magnetic pole on the rotating member. The variable reluctance signal generator detector, on the other

-5-

0191223

hand, requires some movement of the rotating member in order for the detector to produce an output.

It will be understood that what has been disclosed is a novel magnetically-coupled transducer suitable for use at high temperatures, is able to generate relative position information independent of speed, is relatively compact and of small dimensions, and one that may be mounted together with an electric motor without appreciably increasing the dimensions of the motor.

Since certain changes may be made in carrying out the above invention without departing from the scope thereof, it is intended that all matter contained in the above description or shown in the accompanying Drawing shall be interpreted as illustrative and not in a limiting sense.

It is also intended that the following Claims are intended to cover all of the generic and specific features of the invention herein described, and all statements of the scope of the invention which, as a matter of language, might be said to fall therebetween.

-6-

CLAIMS

We Claim:

1.  A magnetically-coupled transducer, comprising:

    (a)  a rotating cylindrical member upon the outer circumference of which is a continuous series of alternating N and S magnetic poles, and

    (b)  at least one fluxgate stationary with respect to the rotating member and positioned such that an output from the fluxgate varies as successive N and S magnetic poles pass the fluxgate.

2.  A magnetically-coupled transducer, as defined in Claim 1, further defined, wherein the fluxgate includes first and second pole pieces each having at least one tooth thereon.

3.  A magnetically-coupled transducer, as defined in Claim 2, further defined, wherein the pole pieces and the teeth thereon are positioned about the rotating member such that when the tooth on the first pole piece is directly adjacent a N magnetic pole on the rotating member, the tooth on the second pole piece is directly adjacent a S magnetic poles on the rotating member.

4.  A magnetically-coupled transducer, as defined in Claim 3, further defined, wherein the fluxgates are two in number and are displaced 90 electrical degrees apart with respect to the magnetic poles on the rotating member.

5.  An electric motor/magnetically-coupled transducer assembly, comprising:

    (a)  an electric motor;

    (b)  a rotatable shaft extending from the motor;

    (c)  a cylindrical member fixed upon the shaft and upon the outer circumference of which member is a continuous series of alternating N and S magnetic poles;

    (d)  at least one fluxgate positioned such that an output from the fluxgate varies as successive N and S magnetic poles pass the fluxgate; and

    (e)  support means to hold the fluxgate stationary with respect to the rotating member.

6.  An electric motor/magnetically-coupled transducer assembly, as defined in Claim 5, further defined, wherein the fluxgate includes first and second pole pieces each having at least one tooth thereon.

-7-

7. An electric motor/magnetically-coupled transducer assembly, as defined in Claim 6, further defined, wherein the pole pieces and the teeth thereon are positioned about the rotating member such that when the tooth on the first pole piece is directly adjacent a N magnetic pole on the rotating member, the tooth on the second pole piece is directly adjacent a S magnetic poles on the rotating member.

8. An electric motor/magnetically-coupled transducer assembly, as defined in Claim 7, further defined, wherein the support means comprises a partially hollow housing surrounding the rotating member and supporting the fluxgates in proper position adjacent the rotating member.

9. An electric motor/magnetically-coupled transducer assembly, as defined in Claim 8, further defined, wherein the fluxgates are two in number and are displaced 90 electrical degrees apart with respect to the N and S poles on the rotating member.

10. Every novel system, apparatus, method, or article disclosed herein.

FIGURE 1

0191223

FIGURE 2

FIGURE 3

0191223

FIGURE 4

39

37

42

12

44

45

15

43

30

41

38

40

46

0191223

FIGURE 5

39

40

38

37

41

43

44

46

0191223